# EUROPÄISCHE PATENTANMELDUNG

(11) **EP 2 336 085 A2**
(43) Veröffentlichungstag der Anmeldung: **22.06.2011**
(21) Anmeldenummer: 10186314.0
(22) Anmeldetag: 14.11.2004
(51) Int. Cl.: C01B 25/45, H01M 4/58, H01M 4/02

(54) **Lithiummetallphosphate, Verfahren zu deren Herstellung und deren Verwendung als Elektrodenmaterialien**

(30) Priorität: 14.11.2003 DE 10353266
(62) Teilanmeldung aus: 04803141.3
(71) Anmelder: Süd-Chemie AG, 80333 München (DE)
(72) Erfinder: Nuspl, Gerhard, 85659, Forstern (DE); Wimmer, Lucia, 84034 Altdorf (DE); Eisgruber, Max, 84079, Bruckberg (DE)
(74) Vertreter: Stolmár Scheele & Partner

(57) **Zusammenfassung**

Beschrieben wird ein Verfahren zur Herstellung einer Verbindung der Formel LiMPO₄, worin M mindestens ein Metall der ersten Übergangsreihe darstellt, umfassend die folgenden Schritte: a) Herstellen einer Precursormischung, enthaltend mindestens eine Li⁺-Quelle, mindestens eine M²⁺-Quelle und mindestens eine PO₄³⁻-Quelle, um einen Niederschlag zu fällen und somit eine Precursorsuspension herzustellen; b) Dispergier- oder Mahlbehandlung der Precursormischung und/oder der Precursorsuspension, bis der D90-Wert der Teilchen in der Precursorsuspension weniger als 50 µm beträgt; und c) Gewinnung von LiMPO₄ aus der gemäß b) erhaltenen Precursorsuspension, vorzugsweise durch Umsetzung unter hydrothermalen Bedingungen. Das danach erhältliche Material weist besonders vorteilhafte Teilchengrößenverteilungen und elektrochemische Eigenschaften bei der Verwendung in Elektroden auf.

## Beschreibung

Die vorliegende Erfindung betrifft ein Verfahren zur Herstellung von Lithiumeisenphosphat, das danach erhältliche Material mit sehr kleiner Teilchengröße und enger Teilchengrößenverteilung sowie dessen Verwendung insbesondere in einer Sekundärbatterie.

Aus dem Stand der Technik ist die Verwendung von synthetischem Lithiumeisenphosphat (LiFePO₄) als alternatives Kathodenmaterial in Lithiumionen-Batterien bekannt. Dies wurde erstmals in A. K. Padhi, K. S. Nanjundaswamy, J. B. Goodenough, J. Electrochem. Soc. Vol. 144 (1977) beschrieben, und ist beispielsweise auch in der US 5,910, 382 offenbart.

Die Verwendung von Phosphaten wie Lithiumeisenphosphat als positive Elektrode für sekundäre Lithiumbatterien ist weiterhin in der WO 02/099913 A1 beschrieben, wobei zur Herstellung aus einer äquimolaren wässrigen Lösung von Li⁺, Fe³⁺ und PO₄³⁻ das Wasser verdampft und dadurch eine Feststoffmischung hergestellt wird, worauf die Feststoffmischung bei einer Temperatur unterhalb von 500°C zersetzt wird, um einen reinen Li- und Fe-Phosphatprecursor zu erzeugen, und anschließend durch Umsetzung des Precursors bei einer Temperatur von unter 800°C in reduzierender Atmosphäre ein LiFePO₄-Pulver erhalten wird.

Weitere sogenannte Sinterverfahren sind aus dem Stand der Technik bekannt. Nachteile sind einerseits die hohen Materialkosten der Ausgangschemikalien (z. B. Eisenoxalat). Auch ist der Schutzgasverbrauch während des Sinterprozesses erheblich und toxische Nebenprodukte wie CO entstehen bei der Sinterung. Es wurde auch gefunden, dass häufig die Partikelgrößenverteilung des Produkts sehr breit und bimodal ist. Weitere Herstellungsverfahren sind beispielsweise aus der WO 02/083555, der EP 1 094 523 A1, der US 2003/0124423 sowie Franger et al., Journal of Power Sources 119 - 121 (2003), S. 252 - 257 bekannt.

Auch die JP 2002-151082 A beschreibt Lithiumeisenphosphat, Verfahren zu seiner Herstellung sowie eine Sekundärbatterie, die es verwendet. Das Verfahren zur Herstellung von Lithiumeisenphosphat ist dadurch gekennzeichnet, dass eine Lithiumverbindung, eine zweiwertige Eisenverbindung und eine Phosphorsäureverbindung so vermischt werden, dass zumindest das Molverhältnis der zweiwertigen Eisenionen und der Phosphorsäureionen etwa 1 _{:} 1 beträgt, und das Gemisch in einem Temperaturbereich von mindestens 100°C bis höchstens 200°C in einem dicht verschlossenen Gefäß unter Beifügen eines polaren Lösungsmittels und eines inaktiven Gases zur Reaktion gebracht wird. Das so erhaltene Lithiumeisenphosphat kann anschließend physikalisch zerkleinert werden.

Obwohl mit den Verfahren nach dem Stand der Technik bereits brauchbares Lithiumeisenphosphat erhalten werden kann, weisen die herkömmlichen Herstellungsverfahren dennoch den Nachteil auf, dass es nicht möglich ist, pulverförmiges Lithiumeisenphosphat mit einer sehr geringen Teilchengröße sowie einer sehr engen Teilchengrößenverteilung zu erhalten.

Es besteht daher ein großer Bedarf nach geeigneten Verfahren zur Herstellung eines Lithiumeisenphosphats mit sehr geringer Teilchengröße sowie sehr enger Teilchengrößenverteilung, das gut in das Elektrodenmaterial einer Sekundärbatterie einarbeitbar ist und dort sehr gute elektrochemische Eigenschaften zeigt.

Aufgabe der vorliegenden Erfindung war es somit, ein Verfahren zur Herstellung von Lithiumeisenphosphat bereitzustellen, das die Nachteile des Standes der Technik vermeidet und insbesondere für Elektroden wiederaufladbarer Batterien besonders geeignetes Material liefert.

Die vorstehende Aufgabe wird erfindungsgemäß mit dem Verfahren nach Anspruch 1 gelöst. Vorteilhafte bzw. bevorzugte Weiterbildungen sind in den Unteransprüchen angegeben.

Das erfindungsgemäße Verfahren kann außer zur Herstellung von LiFePO₄ auch zur Herstellung von anderen Verbindungen der allgemeinen Summenformel LiMP0₄, worin M mindestens ein Metall der ersten Übergangsreihe darstellt, eingesetzt werden. Allgemein ist M ausgewählt aus mindestens einem Metall der Gruppe bestehend aus Fe, Sc, Ti, V, Cr, Mn, Co, Ni, Cu, Zn, Be, Mg, Ca, Sr, Ba, A1, Zr und La. Besonders bevorzugt ist M ausgewählt aus Fe, Mn, Co und/oder Ni. Vorzugsweise umfasst M jedoch zumindest Fe.

Auch kann M für zwei oder mehr Übergangsmetalle in der Verbindung LiMPO₄ stehen; beispielsweise kann das Eisen in LiFePO₄ teilweise durch ein oder mehrere andere Metalle, ausgewählt aus der vorstehenden Gruppe, z. B. durch Zn ersetzt sein. Besonders bevorzugt ist LiFeP0₄. LiMP0₄ wird nach dem erfindungsgemäßen Verfahren bevorzugt in phasenreiner Form gewonnen.

So wurde erfindungsgemäß überraschend gefunden, dass in einem Verfahren zur Herstellung von LiMP0₄ durch eine intensive Dispergieroder Mahlbehandlung einer Precursormischung oder -suspension, enthaltend mindestens eine Li⁺-Quelle, mindestens eine M²⁺-Quelle und mindestens eine PO₄³⁻-Quelle, eine sehr enge Teilchengrößenverteilung sowie eine sehr geringe Teilchengröße des Endprodukts, LiMP0₄, erzielt werden können.

Der erfindungsgemäße Einsatz der Dispergier- oder Mahlbehandlung der Precursormischung bewirkt eine intensive Mischung und gleichzeitig eine Deagglomeration bzw. Verkleinerung der Teilchenaggregate in der Suspension. Dies wird durch ein herkömmliches Rühren mit niedriger Geschwindigkeit nicht bewirkt.

Zur Durchführung der erfindungsgemäßen Dispergier- oder Mahlbehandlung kann jede dem Fachmann als geeignet erscheinende Vorrichtung verwendet werden, mit der ausreichende Scherkräfte oder Turbulenz erzeugt werden können, die zu einer intensiven Mischung und gleichzeitig einer Deagglomeration bzw. Verkleinerung der Teilchenaggregate in der Suspension führen können, so dass ein D90-Wert von weniger als 50 µm erzielt wird. Bevorzugte Vorrichtungen umfassen Dispergatoren (mit oder ohne Pumprotoren), Ultraturrax, Mühlen wie Kolloidmühlen oder Manton-Gaulin-Mühlen, Intensivmischer, Kreiselpumpen, In-Line-Mischer, Mischdüsen wie Injektordüsen oder Ultraschallgeräte. Solche Vorrichtungen als solche sind dem Fachmann bekannt. Die erforderlichen Einstellungen, um den gewünschten Effekt auf die mittlere Teilchengröße in der Precursor-Suspension (vgl. oben) zu erhalten, können je nach Vorrichtungstyp anhand von routinemäßigen Versuchen bestimmt werden.

In vielen Fällen wird ein Leistungseintrag in die

Precursorsuspension im Rahmen der erfindungsgemäßen Dispergier- oder Mahlbehandlung bei mindestens 5 kW/m³ der zu behandelnden Mischung bzw. Suspension, insbesondere mindestens 7 kW/m³ liegen. Dieser Leistungseintrag kann auf bekannte Weise je nach Vorrichtung bestimmt werden, z. B. bei Verwendung eines Ultra-Turrax-Rührers anhand der Formel P = 2^{.}Π^{.}n^{.}M, wobei M das Drehmoment und n die Drehzahl darstellt.

Nach einer weiteren bevorzugten erfindungsgemäßen Ausführungsform wird der Energieeintrag in die Precursorsuspension im Rahmen der erfindungsgemäßen Dispergier- oder Mahlbehandlung bei mindestens 5 kWh/m³ der zu behandelnden Mischung bzw. Suspension, insbesondere mindestens 7 kWh/m³ liegen. Dabei werden vorzugsweise, jedoch nicht zwingend, auch die vorstehenden Werte für den Leistungseintrag eingehalten.

Überraschenderweise wurde auch gefunden, dass eine Zerkleinerung des fertigen LiMPO₄ anstelle der Dispergier- oder Mahlbehandlung bei der Herstellung gemäß der Erfindung nicht zu den entsprechenden vorteilhaften Eigenschaften des LiFePO₄-Pulvers führt, auch wenn versucht wird, vergleichbare Teilchengrößenverteilungen zu erhalten.

Es wird angenommen, ohne dass die Erfindung auf diesen theoretischen Mechanismus beschränkt wäre, dass bei der Dispergier- oder Mahlbehandlung gemäß der Erfindung insbesondere die sich zunächst bei der Herstellung der Mischsuspension bildenden großen Kristallagglomerate verhindert werden, oder zumindest nach der Bildung verkleinert werden. Diese Kristallagglomerate können auch (teilweise) auf Phosphate von Li⁺ und M²⁺ als Zwischenprodukte zurück zu führen sein, die je nach Konzentration aufgrund der Ausbildung von größeren Kristallplättchen bzw. -agglomeraten zu einem Anstieg der Viskosität führen können. Nach einer besonders bevorzugten erfindungsgemäßen Ausführungsform können somit für die Dispergierbehandlung der Precursormischung bzw. -suspension auch solche Vorrichtungen verwendet werden, deren hohe Mischwirkung (oder Scherwirkung) ausreicht, um die Ausbildung großer Kristallite oder Kristallitagglomerate in der Mischung bzw. Suspension zu verhindern und gleichzeitig zu einer hohen Keimbildungsrate zu führen. Nichtbeschränkende Beispiele geeigneter Vorrichtungen wurden bereits vorstehend genannt.

Die genannten Kristallaggregate oder Kristallplättchen können auch durch eine Fällung eines definierten Vorproduktes (Precursors) aus einer löslichen Li⁺-Quelle, einer löslichen M²⁺-Quelle und der (löslichen) PO₄³⁻-Quelle entstehen. Im nachstehenden Erfindungsbeispiel wird z. B. eine wässrige Lösung einer Fe²⁺-Quelle, insbesondere einer wässrigen Lösung von Eisen(II)sulfat-Heptahydrat, FeSO₄ ^{.} 7 H₂O, und einer flüssigen PO₄³⁻-Quelle, insbesondere 85%-iger Phosphorsäure, vorgelegt, und bei langsamer Zugabe einer wässrigen Li⁺-Quelle, insbesondere einer wässrigen LiOH-Lösung, ein frischer Niederschlag von Vivianit (Fe₃ (PO₄) ₂-Hydrat) gefällt. Es ist dabei vorzuziehen, dass die Dispergier- oder Mahlbehandlung bereits vom Beginn der ersten Kristallbildung bis zum Abschluss der Fällung die Bildung von großen Kristallplättchen bzw. Kristallagglomeraten verhindert bzw. diese verkleinert. Vor einer anschließenden bevorzugten

Hydrothermalbehandlung liegt dann unter Verwendung des Dispergieroder Mahlaggregats eine homogene Precursormischung bzw. -suspension, vorzugsweise mit einem Feststoffanteil enthaltend Vivianit (ggf. imprägniert mit Li⁺-ionen), Lithiumphosphat und/oder Eisenhydroxide, vor. Diese(s) Zwischenprodukt(e) muss (müssen) nicht isoliert werden. Bevorzugt kann die Zusammengabe und/oder die Fällung der Precursormischung bzw. -suspension bereits im Hydrothermalbehälter ausgeführt werden (Ein-Topfverfahren).

Durch die Dispergier- oder Mahlbehandlung gemäß der Erfindung wird somit gewährleistet, dass die Fällung sehr homogen abläuft und eine homogene Mischung aus vielen kleinen, etwa gleichgroßen Kristallkeimen entsteht. Diese Kristallkeime können anschließend, insbesondere bei einer anschließenden Hydrothermalbehandlung zu sehr gleichmäßig gewachsenen Kristallen des Endproduktes LiMPO₄ mit einer sehr engen Partikelgrößenverteilung umgesetzt werden. Prinzipiell ist im Rahmen der Erfindung anstelle der Hydrothermalbehandlung auch, gegebenenfalls nach Abtrennung der Mutterlauge z. B. durch Filtrieren und/oder Zentrifugieren, ein Trocknen und ggf. Sintern des Niederschlags aus der Precursormischung nach der erfindungsgemäßen Dispergier- oder Mahlbehandlung möglich. Die Hydrothermalbehandlung ist jedoch bevorzugt und liefert die besten Ergebnisse.

Um den gewünschten Effekt zu erzielen, kann die Dispergier- oder Mahlbehandlung gemäß der Erfindung also vorzugsweise vor oder während der Fällung eines Niederschlags aus der Precursormischung einsetzen, um die Bildung großer Kristallkeime oder -agglomerate zu verhindern bzw. diese zu zerkleinern und zu homogenisieren. Dabei soll ein D90-Wert der Teilchen in der Suspension von weniger als 50 µm erreicht werden. Bevorzugt wird ein D90-Wert der Teilchen in der Precursorsuspension von maximal 25 µm, insbesondere maximal 20 µm, besonders bevorzugt maximal 15 µm, da hiermit die besten Eigenschaften des fertigen Produktes beobachtet wurden.

Nach einer erfindungsgemäßen Ausführungsform kann die Dispergieroder Mahlbehandlung gemäß der Erfindung auch nach der Fällung eines Niederschlags aus der Precursormischung einsetzen, sofern der o. g. D90-Wert erreicht wird.

Es wurde auch überraschend gefunden, dass die Dispergier- oder Mahlbehandlung gemäß der Erfindung vorzugsweise vor der endgültigen Umsetzung zum Lithiumeisenphosphat, insbesondere vor Abschluss einer sich an die Fällung der Precursormischung anschließenden Hydrothermalbehandlung erfolgen sollte, um optimale Ergebnisse zu erzielen. Als Dispergier- oder Mahlbehandlung gemäß der Erfindung wird jedoch sowohl eine Behandlung einer Precursormischung vor als auch während einer Hydrothermalbehandlung angesehen.

Ein wesentlicher Vorteil des erfindungsgemäßen Verfahrens ist es, dass die Teilchengrößenverteilung des hergestellten LiMPO₄ besonders gut reproduzierbar gesteuert werden kann, und somit auch die guten elektrochemischen Eigenschaften ohne große Schwankungen stabil eingehalten werden können.

Bei der vorliegenden Erfindung ist die Wahl der Li⁺-Quelle, der M²⁺-Quelle und der PO₄³⁻-Quelle grundsätzlich nicht beschränkt. Es können alle dem Fachmann geläufigen oder als geeignet erscheinenden Ausgangsmaterialien verwendet werden. Es können verschiedenste Lithiumverbindungen, zweiwertige Verbindungen von M und Phosphorsäureverbindungen passend kombiniert als Synthesegrundmaterialien eingesetzt werden. Bevorzugt sind lösliche Salze oder Verbindungen von Li und M sowie flüssige oder lösliche PO₄-Quellen. Als Beispiele für geeignete Lithiumverbindungen können, ohne Beschränkung, u. a. Lithiumfluorid, Lithiumchlorid, Lithiumbromid, Lithiumiodid, Lithiumcarbonat, Lithiumhydroxid oder Lithiumphosphat angeführt werden. Besonders bevorzugt ist LiOH.

Als Beispiele für zweiwertige Verbindungen von M, hier beispielsweise mit M = Fe können, ohne Beschränkung, u. a. Eisenfluorid, Eisenchlorid, Eisenbromid, Eiseniodid, Eisensulfat, Eisenphosphat, Eisennitrat, Organylsalze von Eisen wie Eisenoxalat oder Eisenacetat angeführt werden. Eisensulfat ist besonders bevorzugt. Falls M ein anderes Metall als Fe darstellt, können die analogen Verbindungen verwendet werden.

Als Beispiele für Phosphorsäureverbindungen können, ohne Beschränkung, u. a. Orthophosphorsäure, Metaphosphorsäure, Pyrophosphorsäure, Triphosphorsäure, Tetraphosphorsäure, Hydrogenphosphate oder Dihydrogenphosphate wie Ammoniumphosphat oder Ammoniumdihydrogenphosphat, Lithiumphosphat oder Eisenphosphat oder beliebige Mischungen daraus angeführt werden. Phosphorsäure ist besonders bevorzugt.

Bei Verwendung von LiOH als Li⁺-Quelle sowie Phosphorsäure als PO₄³⁻-Quelle kann zudem durch die Zugabe von LiOH die Phosphorsäure neutralisiert und somit die Fällung in der Precursormischung eingeleitet werden.

Als Precursormischung wird erfindungsgemäß jede flüssige oder fluide Mischung enthaltend mindestens eine Li⁺-Quelle, mindestens eine M²⁺-Quelle und mindestens eine PO₄³⁻-Quelle angesehen.

Als Precursorsuspension wird erfindungsgemäß jede flüssige oder fluide Precursormischung nach zumindest teilweiser Fällung eines Niederschlags angesehen. Der Niederschlag kann LiMPO₄ oder Zwischenprodukte enthalten.

In der Regel wird die Precursormischung ein Lösungsmittel enthalten, insbesondere ein polares Lösungsmittel. Als polares Lösemittel können beispielsweise Wasser, Methanol, Ethanol, 2-Propanol, Ethylenglykol, Propylenglykol, Aceton, Cyclohexanon, 2-Methylpyrrolidon, Ethylmethylketon, 2-Ethoxiethanol, Propylencarbonat, Ethylencarbonat, Dimethylcarbonat, Dimethylformamid oder Dimethylsulfoxid oder Gemische daraus angeführt werden. Wasser ist als Lösungsmittel bevorzugt. Es kann dann die erfindungsgemäß bevorzugte Nassfällung des LiMPO₄ aus wässriger Lösung erfolgen. Erfindungsgemäß kann also von den bekannten und dem Fachmann geläufigen Ausgangsstoffen bzw. -lösungen oder -suspensionen zur Herstellung des LiMPO₄ ausgegangen werden. Insbesondere können die für eine Nassfällung aus Lösungen bekannten Rezepturen und Verfahren verwendet werden, wobei die Dispergieroder Mahlbehandlung erfindungsgemäß zusätzlich vorgesehen wird. Die Temperatur bei der Herstellung der Precursormischung bzw. der Zusammengabe der mindestens einen Li⁺-Quelle, der mindestens einen M²⁺-Quelle und/oder der mindestens einen PO₄³⁻-Quelle wird vorzugsweise im Bereich zwischen etwa 20 und 80°C, insbesondere zwischen 25 und 60°C, gewählt.

Nach einer bevorzugten Ausführungsform des erfindungsgemäßen Verfahrens erfolgt kein direktes Eindampfen oder Trocknen der Precursor-Mischung bzw. Precursorsuspension. Auch erfolgt nach einer bevorzugten Ausführungsform kein Sintern der Precursormischung bzw. Precursorsuspension, da hierdurch die Eigenschaften des erhaltenen Endproduktes negativ beeinflusst werden können.

Vielmehr hat sich überraschend gezeigt, dass die besten Ergebnisse durch eine hydrothermale Behandlung der Precursormischung bzw. Precursorsuspension und anschließende Trocknung und gegebenenfalls Sinterung des fertig umgesetzten LiFePO₄ erhalten werden.

Unter einer Umsetzung der Precursormischung unter hydrothermalen Bedingungen wird im Rahmen der vorliegenden Erfindung jede Behandlung bei einer Temperatur über Raumtemperatur und einem Dampfdruck über 1 bar angesehen. Die Hydrothermalbehandlung an sich kann in dem Fachmann geläufiger und bekannter Weise durchgeführt werden. Vorzugsweise werden bei den hydrothermalen Bedingungen Temperaturen zwischen 100 bis 250°C, insbesondere 100 bis 180°C sowie ein Druck von 1 bar bis 40 bar, insbesondere 1 bar bis 10 bar Dampfdruck verwendet. Ein mögliches Hydrothermalverfahren ist beispielsweise in der JP 2002-151082 beschrieben, deren diesbezüglicher Offenbarungsgehalt hier durch Bezugnahme aufgenommen wird. Dabei wird nach einer Ausführungsform die Precursormischung in einem dicht verschlossenen bzw. druckbeständigen Gefäß zur Reaktion gebracht. Die Umsetzung erfolgt vorzugsweise in einer Inert- oder Schutzgasatmosphäre. Geeignete inerte Gase sind beispielsweise Stickstoff, Argon, Kohlendioxid, Kohlenmonoxid oder deren Gemische. Die Hydrothermalbehandlung kann beispielsweise über 0,5 bis 15 Stunden, insbesondere über 3 bis 11 Stunden, durchgeführt werden. Nur als nicht beschränkendes Beispiel können folgende konkrete Bedingungen gewählt werden: 1,5 h Aufheizzeit von 50°C (Temperatur der Precursormischung) auf 160°C, 10 h Hydrothermalbehandlung bei 160°C, 3 h Abkühlung von 160°C auf 30°C.

Nach einer bevorzugten erfindungsgemäßen Ausführungsform wird zunächst in wässrigem Medium die M²⁺-Quelle und die PO₄³⁻-Quelle, insbesondere unter Inertgasatmosphäre, gemischt und anschließend, vorzugsweise wiederum unter Inertgasatmosphäre, die Li⁺-Quelle zugegeben. Spätestens mit Einsetzen der Fällung bei zunehmender Neutralisierung der Precursormischung wird dann die Dispergier- oder Mahlbehandlung begonnen und dann die Umsetzung unter hydrothermalen Bedingungen durchgeführt. An die Hydrothermalbehandlung kann sich nach einer erfindungsgemäßen Ausführungsform eine Abtrennung des LiMPO₄ aus der Suspension, z. B. über Filtration und/oder Zentrifugation, anschließen. Weiterhin kann nach einer erfindungsgemäßen Ausführungsform das abgetrennte LiMPO₄ gewaschen werden, insbesondere mit Wasser, um die Salzfracht zu verringern bzw. zu entfernen. Eine Trocknung und/oder Sinterung des LiMPO₄, insbesondere unter Schutzgas- oder Inertatmosphäre, kann sich ebenfalls an die Hydrothermalbehandlung anschließen. Eine sorgfältige Trocknung/Nachtrocknung ist für die elektrochemische Qualität des Endproduktes in der Regel erforderlich, da schon geringe Feuchtigkeitsspuren bei der elektrochemischen Anwendung des Materials in Li-Akkumulatoren bzw. Li-Batterien Probleme, wie eine Zersetzung des Leitsalzes LiPF₆ bewirken können. Eine Sinterung kann optional vorgenommen werden.

Die Trocknung des LiMPO₄ kann über einen weiten Temperaturbereich von etwa 50 bis 750°C vorgenommen werden, wobei die Trocknungstemperatur auch von wirtschaftlichen Erwägungen abhängt. Falls die Herstellung des LiMPO₄ in Abwesenheit einer kohlenstoffhaltigen oder elektronenleitfähigen Substanz bzw. eines Vorläufers davon (vgl. unten) vorgenommen wird, wird in den meisten Fällen eine Trocknung zwischen etwa 50 und 350°C, beispielsweise über 3 h bei 250°C unter Verwendung von Stickstoff 5,0, Vakuum oder Formiergas, ausreichend sein.

Soweit die Herstellung des LiMPO₄ in Anwesenheit einer kohlenstoffhaltigen oder elektronenleitfähigen Substanz bzw. eines Vorläufers davon (vgl. unten) durchgeführt wird, um ein Precoating mit Kohlenstoff zu bewirken, wird in der Regel eine höhere Trocknungstemperatur, in der Regel oberhalb von 500 bzw. 700°C, gewählt. Insbesondere kann eine Sinterung erfolgen, wobei beispielsweise 3 h bei etwa 750°C unter Verwendung von Stickstoff 5.0 erhitzt werden kann. Erst bei ausreichend hohen Temperaturen erhält man dabei den gewünschten leitfähigen Überzug aus der kohlenstoffhaltigen bzw. elektronenleitfähigen Substanz.

Nach einer bevorzugten erfindungsgemäßen Ausführungsform liegen die Komponenten der Precursormischung in folgendem stöchometrischen Verhältnis vor:
a. 1 mol Fe²⁺ : 1 mol PO₄³⁻ : 1 mol Li* (1:1:1)
b. 1 mol Fe²⁺ : 1 mol PO₄³⁻ : 3 mol Li^{*} (1:1:3)
c. jedes Mischungsverhältnis zwischen a und b

Vorzugsweise liegt zumindest das Molverhältnis von M²⁺ Eisenionen zu PO₄³- bei etwa 1:1. Die vorstehenden stöchiömetrischen Verhältnisse sind auch aus wirtschaftlichen Gründen bevorzugt, jedoch nicht zwingend. Gerade im Hydrothermalverfahren bildet sich LiMPO₄ als thermodynamisch stabilste Phase bevorzugt aus, zudem können Abweichungen von den o. g. Verhältnissen zur Beeinflussung der Fällungs- oder Morphologieeigenschaften im Einzelfall sogar beabsichtigt sein. In der Regel können auch Abweichungen von 20%, zumindest von etwa 10% von den vorstehenden stöchiometrischen Verhältnissen toleriert werden.

Das Hydrothermalverfahren bietet auch Vorteile im Hinblick auf einen stark reduzierten Schutzgasbedarf im Vergleich zu einem alternativ möglichen Sinterverfahren aus einer trockenen Pulvervormischung oder Precursormischung. Außerdem wurde überraschend gefunden, dass die Partikelmorphologie und Partikelgrößenverteilung sehr viel gezielter als bei einem reinen Sinterverfahren gesteuert werden kann.

Zu große LiFePO₄ Partikel führen bei hohen Lade-Entladeraten (hohe Lade-/Entladeströmen) zu einer kinetisch kontrollierten Begrenzung der einem Akkumulator entnehmbaren Kapazität, d. h. die LithiumIonen könne beim Entladen nicht mehr schnell genug durch die Grenzschicht LiFePO₄/FePO₄ wandern, die spezifische Kapazität der Elektrode fällt bei hohen Lade-/Entladeraten stark ab. Für einen kommerziellen Einsatz des Lithiumeisenphosphats ist aber eine ausreichende spezifische Kapazität auch bei hohen Lade-/Entladeströmen wichtig.

Die Untersuchungen der Erfinder haben auch gezeigt, dass man auch durch bloße Nachvermahlung und/oder Sichtung des fertigen, ohne die erfindungsgemäße Dispergier- oder Mahlbehandlung hergestellten LiMPO₄ weder die gleiche geringe Teilchengröße und enge Teilchengrößenverteilung, noch die hervorragenden elektrochemischen Eigenschaften erzielen kann. Dies gilt auch gegenüber LiMPO₄, das nur durch direkte Sinterung einer Pulver-Precursormischung hergestellt worden ist. Es wird angenommen, dass dies auf die gleichmäßigen und kleinen Kristallisationskeime zurückzuführen ist, die durch die Dispergier- oder Mahlbehandlung gemäß der Erfindung erzeugt werden und der Umsetzung zum fertigen LiMPO₄-Produkt zugrunde liegen. Die dadurch erhaltene feinteilige und gleichmäßige Teilchengröße wirkt sich auch im Falle einer Trocknung bzw. Sinterung des nach dem erfindungsgemäßen Verfahren hergestellten LiMPO₄ positiv aus.

Ein weiterer Aspekt der vorliegenden Erfindung betrifft daher LiMPO₄, das nach dem vorstehend beschriebenen Verfahren erhältlich ist. Dieses Material weist vorzugsweise einen D₉₀-Wert der Teilchen von maximal 25 µm, insbesondere maximal 20 µm, besonders bevorzugt maximal 15 µm auf. Die mittlere (durchschnittliche) Teilchengröße (D50-Wert) liegt bei weniger als 0,8 µm, vorzugsweise bei weniger als 0,7 µm, insbesondere bei weniger als 0,6 µm, besonders bevorzugt bei weniger als 0,5 µm. Die Teilchengrößenverteilung ist vorzugsweise zumindest weitgehend eine Normalverteilung (monomodal). Der D10-Wert liegt nach einer Ausführungsform bei weniger als 0,35 µm, vorzugsweise bei weniger als 0,40 µm, kann jedoch bei engen Teilchengrößenverteilungen in Abhängigkeit von dem D90-Wert auch höher liegen. Der D90-Wert liegt vorzugsweise bei weniger als 3,0 µm, vorzugsweise bei weniger als 2,5 µm, insbesondere bei weniger als 2,0 µm.

Die Partikelgrößenverteilung des erfindungsgemäßen LiMPO₄ ist, wie vorstehend erwähnt vorzugsweise sehr eng, wobei nach einer besonders bevorzugten Ausführungsform die Differenz zwischen dem D90-Wert und dem D10-Wert nicht mehr als 2 µm, vorzugsweise nicht mehr als 1,5 µm, insbesondere nicht mehr als 1 µm, besonders bevorzugt nicht mehr als 0,5 µm beträgt.

Es hat sich überraschend gezeigt, dass die vorstehend beschriebenen Vorteile des erfindungsgemäßen LiMPO₄ auch bei der anschließenden Verarbeitung mit anderen Komponenten, z. B. von kohlehaltigen Materialien bei der Herstellung von Elektrodenmaterialien besondere Vorteile bieten. So ermöglicht das erfindungsgemäße LiMPO₄ offenbar aufgrund seiner besonderen Teilchengrößenverteilung wie hierin definiert eine bessere und leichtere Verarbeitung zu Elektrodenmaterialien und einen besonders innigen Verbund z. B. mit den kohlehaltigen Leitmaterialien. Noch ein weiterer Aspekt der vorliegenden Erfindung betrifft daher eine Zusammensetzung, insbesondere Elektrodenmaterial, enthaltend LiMPO₄ wie hierin definiert.

Ein weiterer Aspekt der vorliegenden Erfindung betrifft die Verwendung eines LiMPO₄-Materials wie vorstehend definiert in einem Lithiumakkumulator oder einer sekundären (wiederaufladbaren) Li-Batterie als Elektrodenmaterial. Vorzugsweise sind die Primärpartikel (=Kristallite) des fertigen LiMPO₄-Produkts in REM-Aufnahmen nach Größe und Morphologie weitgehend einheitlich. Nicht nach dem erfindungsgemäßen Verfahren hergestelltes LiMPO₄ weisen dagegen uneinheitlich große Primärpartikel oder uneinheitliche Kristallmorphologien auf.

Nach einer bevorzugten erfindungsgemäßen Ausführungsform erfolgt die Herstellung oder Fällung der Precursor-Mischung und/oder die Umsetzung unter hydrothermalen Bedingungen in Anwesenheit weiterer Komponenten, insbesondere einer elektronenleitfähigen Substanz. Dabei kann es sich vorzugsweise um einen kohlenstoffhaltigen Feststoff wie Kohle, insbesondere Leitkohle oder Kohlefasern handeln. Es kann auch ein Vorläufer einer elektronenleitfähigen Substanz bzw. des kohlenstoffhaltigen Feststoffs eingesetzt werden, der sich bei der Trocknung bzw. Sinterung des LiMPO₄ in Kohlenstoffpartikel umwandelt, wie eine Zuckerverbindung. Weitere Beispiele geeigneter organischer Verbindungen sind in der WO 02/083555 genannt, deren diesbezüglicher Offenbarungsgehalt durch Bezugnahme hier aufgenommen wird. Vorzugsweise sind die in dem fertigen LiMPO₄-Produkt enthaltenen Kohlenstoffpartikel homogen verteilt. Nach einer besonders bevorzugten erfindungsgemäßen Ausführungsform wird der eingesetzte kohlenstoffhaltige Feststoff als Kristallisationskeim in der Umsetzung der Precursor-Mischung verwendet.

Prinzipiell ist jedoch jedes dem Fachmann geläufige Verfahren zur Einbringung von Kohle oder kohlenstoffhaltigem, elektrisch leitfähigen Material bzw. zur Vermischung mit weiteren Komponenten geeignet. Auch eine intensive Vermischung oder Vermahlen des fertigen LiMPO₄ mit mindestens einem kohlenstoffhaltigen Feststoff wie Leitkohle ist möglich. Weitere mögliche Verfahren sind das Aufziehen von Kohlepartikeln auf die Oberfläche der LiMPO₄-Partikel in einer wässrigen oder nicht-wässrigen Suspension oder die Pyrolyse eines Gemenges aus LiMPO₄-Pulver und einem Kohlenstoff-Vorläufermaterial. Das beispielsweise so erhaltene kohlenstoffhaltige LiMPO₄ enthält in der Regel bis zu 10 Gew.-%, vorzugsweise bis zu 5 Gew.-%, besonders bevorzugt bis 2,5 Gew.-% Kohlenstoff, bezogen auf das LiMPO₄.

Technisch bevorzugt ist ein Pyrolyse-Verfahren, bei dem mindestens ein Kohlenstoff-Vorläufermaterial, vorzugsweise ein Kohlenhydrat, wie Zucker oder Cellulose und besonders bevorzugt Lactose mit dem erfindungsgemäßen LiMPO₄-Pulver vermengt wird, z. B. durch Verkneten, wobei Wasser als Hilfsmittel zugegeben werden kann. Nach einer technisch besonders bevorzugten Ausführungsform wird das Kohlenstoff-Vorläufermaterial dem noch ungetrockneten feuchten LiMPO₄-Filterkuchen zugegeben. Anschließend wird die Mischung aus erfindungsgemäßem LiMPO₄-Pulver und Kohlenstoff-Vorläufermaterial an Schutzgas, an Luft oder im Vakuum bei Temperaturen von vorzugsweise 50°C bis 200°C getrocknet und an Schutzgas, wie z. B. Stickstoff 5.0 oder Argon auf eine Temperatur zwischen z. B. 500°C und 1000°C, bevorzugt zwischen 700°C und 800°C erhitzt, wobei das Kohlenstoff-Vorläufermaterial zu Kohle pyrolysiert wird. Anschließend erfolgt vorzugsweise eine Mahl- oder Deagglomerationsbehandlung.

Nach einer weiteren bevorzugten erfindungsgemäßen Ausführungsform liegt die BET-Oberfläche des verwendeten LiMPO₄ bei mehr als etwa 3,5 m²/g, insbesondere mehr als etwa 4 m²/g, besonders bevorzugt mehr als 5 m²/g, mehr als 10 m²/g oder sogar mehr als 15 m²/g, bestimmt nach DIN 66131 (Mehrpunkt-Bestimmung).

Eine Verbesserung der Eigenschaften des LiFePO₄ durch ein Precoating mit Kohlenstoff ist auch beschrieben in: Ravet et al., Abstract No. 127, 196^{th} ECS-Meeting, Honolulu, Hl, Oct. 17-22 (1999).

Der Kohleanteil verbessert auch die Verarbeitbarkeit des LiMPO₄-Pulvers zu Batterieelektroden durch Veränderung der Oberflächeneigenschaften und/oder verbessert die elektrische Anbindung in der Batterieelektrode.

Alternativ soll eine deutliche Verbesserung der elektronischen Leitfähigkeit durch gezielte Dotierung mit Mg²⁺, A1³⁺, Ti⁴⁺, Zr⁴⁺, Nb⁵⁺, W⁶⁺ möglich sein (S. Y. Chung, J. T. Bloking, Y. M. Chiang, Nature, Vol. 1, October 2002, 123).

Ein weiterer erfindungsgemäßer Aspekt betrifft einen Li-Akkumulator oder eine Li-Sekundärbatterie enthaltend das erfindungsgemäße, gegebenenfalls kohlenstoffhaltige, LiMPO₄. Die Sekundärbatterie (Lithiumionen-Sekundärbatterie) als solche kann dabei auf an sich bekannte Weise hergestellt werden, beispielsweise wie nachstehend ausgeführt und in der JP 2002-151082 beschrieben. Dabei wird das wie oben erhaltene Lithiumeisenphosphat der vorliegenden Erfindung zumindest als ein Teil des Materials für den positiven Pol der Sekundärbatterie verwendet. In diesem Fall erfolgt zuerst eine Vermischung des Lithiumeisenphosphats der vorliegenden Erfindung mit, falls nötig, elektrisch leitfähigen Zusatzstoffen und einem Bindemittel gemäß einem üblichen Verfahren zur Herstellung der positiven Elektrode einer Sekundärbatterie. Die Sekundärbatterie wird dann aus dieser positiven Elektrode, und einem üblicherweise verwendeten Material für die negative Elektrode wie etwa metallischem Lithium oder einer schichtförmigen Kohlenstoffverbindung wie z. B. Graphit, ferner aus einer üblicherweise verwendeten nicht-wässrigen Elektrolytlösung, beispielsweise aus Propylencarbonat oder Ethylencarbonat o. ä., in dem ein Lithiumsalz wie LiBF₄ oder LIPF₆ gelöst ist, als Hauptbestandteile hergestellt.

### Bestimmung der Teilchengrößenverteilung:

Die Teilchengrößenverteilungen für die Precursorsuspensionen und das erzeugte LiMPO₄ wird anhand der Lichtstreuungsmethode unter Verwendung handelsüblicher Vorrichtungen bestimmt. Diese Methode ist dem Fachmann bekannt, wobei auch auf die Offenbarung hierzu in der JP 2002-151082 und der WO 02/083555 verwiesen und Bezug genommen wird. Vorliegend wurden die Teilchengrößenverteilungen mit Hilfe eines Laserbeugungsmessgerätes (auf Mastersizer S, Firma Malvern Instruments GmbH, Herrenberg, DE) und der Software des Herstellers (Version 2.19) mit einem Malvern Small Volume Sample Dispersion Unit, DIF 2002 als Messeinheit bestimmt. Es wurden folgende Messbedingungen gewählt: Compressed range; active beam length 2,4 mm; Messbereich: 300 RF; 0,05 bis 900 µm. Die Probenvorbereitung und -messung erfolgte nach den Herstellerangaben.

Der D90-Wert gibt den Wert an, bei dem 90% der Teilchen in der gemessenen Probe einen kleineren oder gleichen Teilchendurchmesser aufweisen. Entsprechend geben der D50-Wert bzw. der D10-Wert den Wert an, bei. dem 50% bzw. 10% der Teilchen in der gemessenen Probe einen kleineren oder gleichen Teilchendurchmesser aufweisen.

Nach einer besonders bevorzugten erfindungsgemäßen Ausführungsform gelten die in der vorliegenden Beschreibung genannten Werte für die D10-Werte, die D50-Werte, die D90-Werte sowie die Differenz der D90-und der D10-Werte bezogen auf den Volumenanteil der jeweiligen Teilchen am Gesamtvolumen. Danach geben die hierin genannten D10-, D50- und D90-Werte nach dieser erfindungsgemäßen Ausführungsform diejenigen Werte an, bei dem 10 Volumen-% bzw. 50 Volumen-% bzw. 90 Volumen-% der Teilchen in der gemessenen Probe einen kleineren oder gleichen Teilchendurchmesser aufweisen. Bei der Einhaltung dieser Werte werden erfindungsgemäß besonders vorteilhafte Materialien bereitgestellt und negative Einflüsse von relativ groben Teilchen (mit verhältnismäßig größerem Volumenanteil) auf die Verarbeitbarkeit und die elektrochemischen Produkteigenschaften vermieden. Besonders bevorzugt gelten die in der vorliegenden Beschreibung genannten Werte für die D10-Werte, die D50-Werte, die D90-Werte sowie die Differenz der D90- und der D10-Werte sowohl bezogen auf Prozent als auch Volumenprozent der Teilchen.

Bei Zusammensetzungen (z. B. Elektrodenmaterialien), die neben dem LiMPO₄ weitere Komponenten enthalten, insbesondere bei kohlehaltigen Zusammensetzungen, kann die vorstehende Lichtstreuungsmethode zu irreführenden Ergebnissen führen, da die LiMPO₄-Teilchen (Partikel) durch das zusätzliche (z. B. kohlehaltige)

Material zu größeren Agglomeraten verbunden sein können. Die Teilchengrößenverteilung des LiMPO₄ bei solchen Zusammensetzungen kann jedoch anhand von REM-Aufnahmen wie folgt bestimmt werden:
Eine kleine Menge der Pulverprobe wird in Aceton suspendiert und für 10 min mit Ultraschall dispergiert. Sofort danach werden einige Tropfen der Suspension auf einen Probenteller eines Rasterelektronenmikroskops (REM) getropft. Die Feststoffkonzentration der Suspension und die Anzahl der Tropfen werden so bemessen, dass sich eine weitgehend einlagige Schicht aus Pulverpartikeln (der Ausdruck "Partikel" wird als Synonym von "Teilchen" verwendet) auf dem Träger ausbildet, um ein gegenseitiges Verdecken der Pulverpartikel zu verhindern. Das Auftropfen muss rasch erfolgen, bevor sich die Partikel durch Sedimentation nach der Größe trennen können. Nach Trocknen an Luft wird die Probe in die Messkammer des REM überführt. Im vorliegenden Beispiel handelt es sich um ein Gerät des Typs LEO 1530, das mit einer Feldemissionselektrode bei 1,5 kV Anregungsspannung und einem Probenabstand von 4 mm betrieben wird. Von der Probe werden mindestens 20 zufällig gelegte Ausschnittsvergrößerungen mit einem Vergrößerungsfaktor von 20000 aufgenommen. Diese werden jeweils auf einem DIN A4-Blatt mitsamt dem eingeblendeten Vergrößerungsmaßstab ausgedruckt. Auf jedem der mindestens 20 Blätter werden nach Möglichkeit mindestens 10 frei sichtbare LiMPO₄-Partikel, aus denen die Pulverpartikel zusammen mit dem kohlenstoffhaltigen Material aufgebaut sind, zufällig ausgewählt, wobei die Umgrenzung der LiMPO₄-Partikel durch das Fehlen fester, direkter Verwachsungsbrücken definiert wird. Verbrückungen durch Kohlenstoffmaterial hingegen werden zur Partikelgrenze gezählt. Von jedem dieser ausgewählten LiMPO₄-Partikel wird jeweils die in der Projektion längste und kürzeste Achse mit einem Lineal abgemessen, und anhand des Maßstabsverhältnisses auf die realen Partikelabmessungen umgerechnet. Für jedes ausgemessene LiMPO₄-Partikel wird der arithmetische Mittelwert aus der längsten und der kürzesten Achse als Partikeldurchmesser definiert. Anschließend teilt man die ausgemessenen LiMPO₄-Partikel in Analogie zur Lichtstreuungsmessung in Größenklassen ein. Trägt man die Anzahl der jeweils zugehörigen LiMPO₄-Partikel über der Größenklasse auf, erhält man die differentielle Partikelgrößenverteilung bezogen auf die Partikelanzahl. Werden die Partikelzahlen fortlaufend von den kleinen zu den großen Partikelklassen hin aufsummiert, erhält man die kumulierte Partikelgrößenverteilung, aus der D10, D50 und D90 auf der Größenachse direkt abgelesen werden können.

Das beschriebene Verfahren findet auch Anwendung auf LiMPO₄-haltige Batterieelektroden. In diesem Falle wird jedoch statt einer Pulverprobe eine frische Schnitt- oder Bruchfläche der Elektrode auf dem Probenträger befestigt und im REM untersucht.

Die Erfindung wird nun anhand der nachstehenden nicht-beschränkenden Beispiele näher erläutert. Die anliegenden Figuren zeigen:
Fig. 1 die Teilchengrößenverteilung (volumenbezogen) eines erfindungsgemäß hergestellten LiMPO₄ gemäß Beispiel 1;
Fig. 2 die Teilchengrößenverteilung (volumenbezogen) eines nicht erfindungsgemäß hergestellten LiMPO₄ gemäß Beispiel 2;
Fig. 3 die Teilchengrößenverteilung (volumenbezogen) eines erfindungsgemäß hergestellten LiMPO₄ gemäß Beispiel 3.

### Beispiele:

### Beispiel 1: Herstellung von LiFePO₄ nach einem erfindungsgemäßen Verfahren einschließlich Hydrothermalbehandlung

### Reaktionsgleichung

FeSO₄ ^{.}7 H₂O + H₃PO₄ + 3 LiOH ^{.} LiFePO₄ + Li₂SO₄ + 11 H₂O

LiFePO₄ ist als fertiges Produkt bei Raumtemperatur an Luft ohne Oxidation lagerbar.

Bei der Herstellung von LiFePO₄ nach der angegebenen Reaktionsgleichung ist zu beachten, dass das LiFe^{II}PO₄ aus einer wässrigen Fe^{II}-Precursorlösung gefällt wird. Die Umsetzung und Trocknung/Sinterung ist daher unter Schutzgas oder Vakuum durchzuführen, um eine teilweise Oxidation von Fe^{II} zu FE^{III} unter Bildung von Nebenprodukten wie Fe₂O₃ oder FePO₄ zu vermeiden.

### Herstellung und Fällung einer Precursormischung

417,04 g FeSO₄ ^{.}7 H₂O werden in ca. 1 1 destilliertem Wasser gelöst und langsam unter Rühren 172,74 g 85%ige Phosphorsäure zugegeben. Anschließend wird mit destilliertem Wasser auf 1,5 1 aufgefüllt. Die saure Lösung wird im Laborautoklaven (Volumen: 1 Gallone) bei 400 UPM Rührergeschwindigkeit vorgelegt, der Autoklav über das Tauchrohr mit ca. 6-7 bar Stickstoff beaufschlagt und über das Entlüftungsventil wieder entspannt. Die Prozedur wird 2 x wiederholt.

188,82 g Lithiumhydroxid LiOH · H₂O werden in 1 1 destilliertem Wasser gelöst.

Am Autoklaven wird zur Durchführung der Dispergier- oder Mahlbehandlung gemäß der vorliegenden Erfindung ein Dispergator (Firma IKA, ULTRATURRAXⓇ UTL 25 Basic Inline mit Dispergierkammer DK 25.11) zwischen Entlüftungsventil und Bodenablassventil angeschlossen. Die Pumprichtung des Dispergators ist Bodenablassventil - Dispergator - Entlüftungsventil. Der Dispergator wird auf mittlerer Leistungsstufe (13500 UPM) nach den Angaben des Herstellers gestartet.

Anschließend wird die vorbereitete LiOH-Lösung mit einer Prominent-Membranpumpe über das Tauchrohr in den Autoklaven gepumpt (Hub 100%, 180 Hübe/Minute; entspricht höchster Leistung der Pumpe) und mit ca. 500 bis 600 ml destilliertem Wasser nachgespült. Der Vorgang dauert etwa 20 Minuten, wobei die Temperatur der entstandenen Suspension auf ca. 35°C steigt. Nach Zupumpen und Nachspülen wird die Suspension im Autoklaven auf 50°C erhitzt. Nach Zugabe des Lithiumhydroxids fällt ein grünlich-brauner Niederschlag aus.

Der Dispergator, der vor Beginn der LiOH-Zugabe gestartet wird, wird insgesamt etwa 1 Stunde zur Intensivmischung bzw. Vermahlung der entstandenen, sehr viskosen Suspension eingesetzt (nach Zupumpen der LiOH-Lösung bei 50°C). Die Teilchengröße lag danach bei D90= 13,2 µm. Der volumenbezogene D90-Wert lag entsprechend.

Zur Messung der Teilchengrößen in der Precursorsuspension kann wie folgt vorgegangen werden: Unter Bezugnahme auf die vor den Beispielen angegebene Methode zur Bestimmung der Teilchengrößen (verteilung) werden 20 bis 40 mg der Suspension in 15 ml Wasser suspendiert und 5 min mit einem Ultraschallfinger (Nennleistung 25 Watt, 60% Leistung) dispergiert. Anschließend wird sofort in der Messeinheit gemessen. Die richtige Einstellung der Probenmenge kann im Einzelfall anhand der Anzeige am Messgerät (grüner Messbereich) überprüft werden.

Der Einsatz eines Dispergators bewirkt eine Intensivmischung und Deagglomerierung der gefällten viskosen Vormischung. Bei der dabei ablaufenden Fällung und Kristallisation der Precursorsuspension entsteht durch die Vorvermahlung bzw. Intensivvermischung im Dispergator eine homogene Mischung aus vielen kleinen, etwa gleich großen Kristallkeimen. Diese Kristallkeime kristallisieren bei der anschließenden Hydrothermalbehandlung (siehe unten) zu sehr gleichmäßig gewachsenen Kristallen des Endprodukts LiFePO₄ mit einer sehr engen Partikelgrößenverteilung. Der Leistungs- bzw. Energieeintrag über die Dispergierbehandlung lag bei mehr als 7 kW/m³ bzw. mehr als 7 kWh/m³ der behandelten Precursormischung/-suspension.

### Hydrothermalbehandlung:

Die jeweils frisch hergestellte Suspension wird im Laborautoklaven hydrothermal behandelt. Vor dem Aufheizen der Suspension wird der Autoklav mit Stickstoff gespült, um vorhandene Luft vor dem Hydrothermalprozess aus dem Autoklaven zu verdrängen. LiFePO₄ bildet sich ab Hydrothermaltemperaturen von etwa 100 bis 120°C. Nach dem Hydrothermalprozess wird das Material mit dem Seitz-Filter abfiltriert und gewaschen. Im einzelnen:
Nach Abschalten und Abklemmen des Dispergators wird der Ansatz in 1,5 Stunden auf 160°C erhitzt und eine Hydrothermalbehandlung über 10 Stunden bei 160°C durchgeführt. Anschließend wird in 3 Stunden auf 30°C abgekühlt.

Danach kann das LiFePO₄ ohne sichtbare Oxidation an Luft oder im Trockenschrank, z. B. bei milden Temperaturen (40°C) getrocknet werden.

Es kann jedoch auch eine Weiterverarbeitung des wie vorstehend beschrieben erhaltenen Materials erfolgen:

### Filtration des Lithiumeisenphosphats LiFePO₄

Nach der Hydrothermalbehandlung wird die abgekühlte Suspension (max. 30°C) unter Stickstoffatmosphäre durch das Bodenablassventil des Autoklaven in einen Druckfilter gepumpt (sog. "Seitz-Filter"). Dabei wird die Prominent-Membranpumpe so eingestellt, dass ein Druck von 5 bar nicht überschritten wird. Der Filterkuchen wird so lange mit destilliertem Wasser nachgewaschen, bis die Leitfähigkeit des Waschwassers 200 µS/cm unterschreitet.

### Trocknung und Deagglomeration des Lithiumeisenphosphats LiFePO₄

Der Filterkuchen wird im Vakuumtrockenschrank bei 70°C über Nacht auf eine Restfeuchte unter 5% vorgetrocknet und anschließend in. einem Schutzgasofen ("Linn KS 80-S") unter einem Formiergasstrom (90% N₂/10% H₂) von 2001/h bei 250°C auf eine Restfeuchte < 0,5% nachgetrocknet. Anschließend wird das LiFePO₄ in einer Labor-Rotormühle ("Fritsch Pulverisette 14") mit einem 0,08 mm Sieb deagglomeriert.

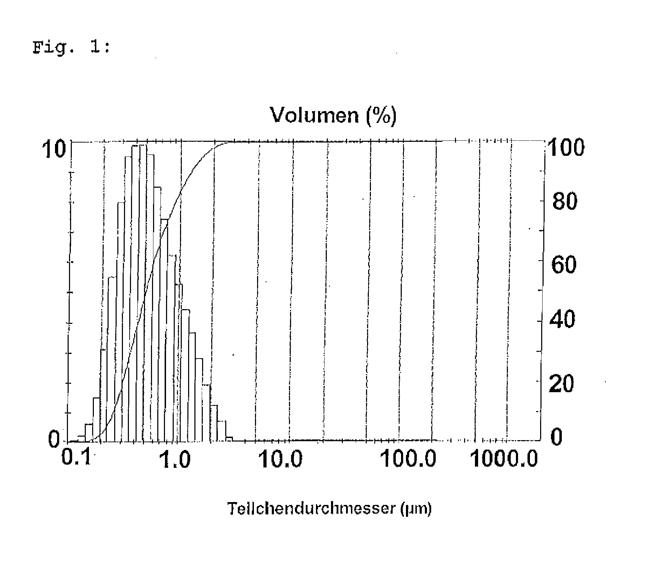

Die sich dabei ergebende typische Partikelgrößenverteilung des fertigen LiFePo₄ (mit Dispergator-Behandlung, nach Hydrothermalbehandlung, Trocknen und Deagglomeration wie vorstehend beschrieben) ist aus Fig. 1 ersichtlich. Zur Verdeutlichung der vorteilhaften Partikelgrößenverteilung und der Abwesenheit der störenden größeren Partikel in den erfindungsgemäßen Produkten sind die volumenbezogenen Daten dargestellt. Die auf den Teilchenanteil (%) bezogenen Werte waren wie folgt: D50-Wert kleiner 0,5 µm, D10-Wert kleiner 0,35 µm; D90-Wert kleiner 2,0 µm; Differenz zwischen dem D90-Wert und dem D10-Wert kleiner 1,5 µm.

Zur Messung der Teilchengrößen in einer pulverförmigen Probe kann wie folgt vorgegangen werden: Unter Bezugnahme auf die vor den Beispielen angegebene Methode zur Bestimmung der Teilchengrößen (verteilung) werden 20 bis 40 mg der Pulverprobe in 15 ml Wasser suspendiert und 5 min mit einem Ultraschallfinger (Nennleistung 25 Watt, 60% Leistung) dispergiert. Anschließend wird sofort in der Messeinheit gemessen. Die richtige Einstellung der Probenmenge kann im Einzelfall anhand der Anzeige am Messgerät (grüner Messbereich) überprüft werden.

### Beispiel 2: Herstellung von LiFePO₄ ohne Dispergatorbehandlung (Vergleich)

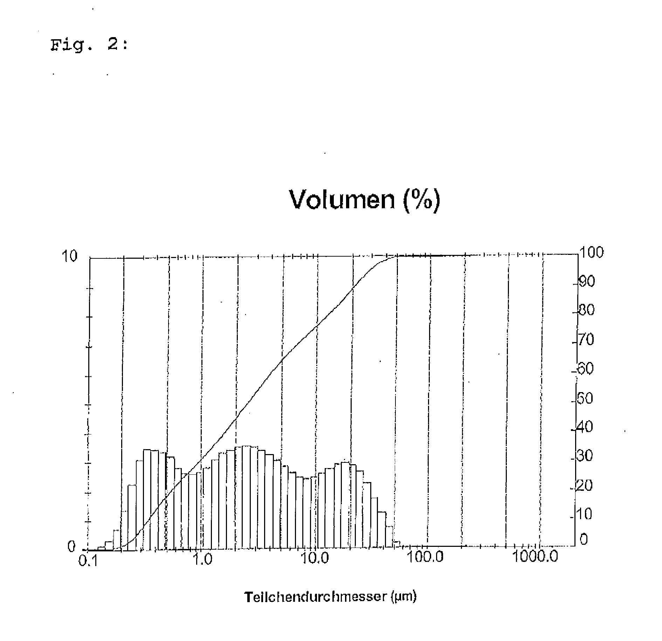

Zum Vergleich wurde LiFePO₄ nach dem gleichen Syntheseverfahren wie in Beispiel 1 beschrieben hergestellt, jedoch ohne erfindungsgemäßen Einsatz des Dispergators. Es wurde unter sonst gleichen Reaktionsbedingungen eine deutlich breitere Partikelgrößenverteilung mit einem größeren Anteil an verwachsenen Agglomeratstrukturen erhalten. Ohne den Einsatz eines Dispergators lag der D₉₀-Wert (auf Volumenanteil oder auf Teilchenzahl bezogen) nach Zugabe der LiOH-Lösung bei mehr als 200 µm. Die trotz der ebenfalls erzielten Phasenreinheit des LiFePO₄ deutlich gröbere Partikelgrößenverteilung des fertigen LiFePO₄ (nach Hydrothermalbehandlung, Trocknen und Deagglomeration) ist in Fig. 2 dargestellt. Zur Verdeutlichung der Anwesenheit störender größerer Partikel sind die volumenbezogenen Daten dargestellt. Der auf den Teilchenanteil (%) bezogene D50-Wert lag über 0,8 µm.

Auch ein gemäß der US 2003/0124423, Seite 10, Absatz [0015], hergestelltes LiFePO₄ konnte trotz intensiver Vermahlung mit einem Mörser nicht auf die Teilchengrößenverteilung der erfindungsgemäßen Produkte gebracht werden; es konnte kein D50-Wert kleiner 0,8 µm und keine Differenz des D90- und des D10-Wertes von 2 µm oder darunter erzielt werden.

### Beispiel 3: Herstellung von LiFePO₄ nach einem erfindungsgemäßen Verfahren einschließlich Hydrothermalbehandlung

Es wurde LiFePO₄ nach dem gleichen Syntheseverfahren wie in Beispiel 1 beschrieben hergestellt, jedoch wurde der Dispergator (Firma IKA, ULTRATURRAX® UTL 25 Basic Inline mit Dispergierkammer DK 25.11) auf der höchsten Leistungsstufe betrieben. Der Leistungs- bzw. Energieeintrag über die Dispergierbehandlung lag bei mehr als 10 kW/m³ bzw. mehr als 10 kWh/m³ der behandelten Precursormischung/- suspension. Die Teilchengröße der Suspension nach der Dispergatorbehandlung lag bei D₉₀ = 10,8 µm. Der volumenbezogene D90-Wert lag etwas darunter.

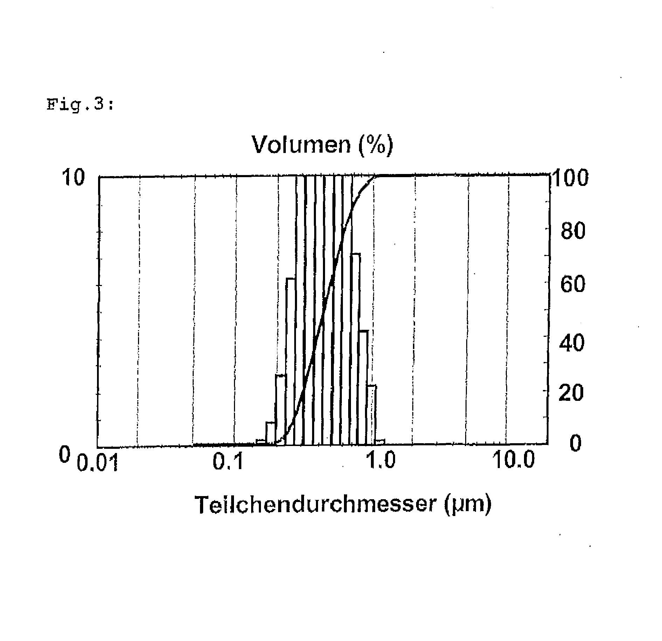

Die Hydrothermalbehandlung, Filtration, Trocknung und Deagglomeration erfolgte wie in Beispiel 1 angegeben. Die sich dabei ergebende typische Partikelgrößenverteilung des fertigen LiFePO₄ ist aus Fig. 3 ersichtlich. Zur Verdeutlichung der vorteilhaften Partikelgrößenverteilung und der Abwesenheit der störenden größeren Partikel in den erfindungsgemäßen Produkten sind die volumenbezogenen Daten dargestellt. Die auf den Teilchenanteil (%) bezogenen Werte waren wie folgt: D50-Wert kleiner 0,5 µm; D10-Wert kleiner 0,35 µm; D90-Wert kleiner 2,0 µm; Differenz zwischen dem D90-Wert und dem D10-Wert kleiner 1,0 µm.

In elektrochemischen Tests zeigte das unter Verwendung des Dispergators hergestellte erfindungsgemäße LiFePO₄ gegenüber dem ohne Verwendung eines Dispergators hergestellten Vergleichsmaterial sowie einem durch ein reines Sinterverfahren gemäß Stand der Technik hergestellten Material die besten Eigenschaften, insbesondere bei hohe Lade/Entladeraten.

### Beispiel 4: Herstellung von LiFePO₄ nach einem erfindungsgemäßen Verfahren einschließlich Hydrothermalbehandlung

21,894 kg FeSO₄* 7H₂O werden in 42 1 deionisiertem Wasser gelöst und langsam unter Rühren 9,080 kg 85%ige Phosphorsäure zugegeben. Die saure Lösung wird in einem emaillierten 2001 Autoklaven mit Ankerrührer vorgelegt und bei 45 UPM gerührt. Der Kopfraum des Autoklaven wird vor dem Verschließen mit Stickstoff gespült. Die saure Lösung wird über eine Kreiselpumpe mit ca. 5kW Leistungsaufnahme und mit einer gemessenen Durchflussleistung von durchschnittlich 7000 1/h umgepumpt. Dabei wird die Lösung über das Bodenablassventil des Autoklaven entnommen und über einen Deckelflansch wieder zugeführt. 10,289 kg LiOH*H₂O werden in 62 1 deionisiertem Wasser gelöst. Diese alkalische Lösung wird über eine Monopumpe und eine Injektordüse der umgepumpten sauren Lösung auf der Druckseite der Kreiselpumpe zugeführt. Dieser Vorgang dauert 15 min, wobei die Temperatur der umgepumpten Lösung von 18,3°C auf 42,1°C ansteigt. Die dabei entstehende Suspension wird weiter für 45 min mit der Kreiselpumpe umgepumpt und mit dem Ankerrührer bei 45 UPM gerührt, wobei sich die Temperatur auf 51,1°C weiter erhöht. Die Kreiselpumpe sorgt erfindungsgemäß während des gesamten Vorgangs mit ihrer hohen Turbulenzwirkung für die Bildung einer feinteiligen Suspension, wobei vergleichbare Teilchengrößenverteilungen wie in Beispiel 1 erzielt werden konnten. Der Leistungs- bzw. Energieeintrag über die Dispergierbehandlung lag bei mehr als 7 kW/m³ bzw. mehr als 7 kWh/m³ der behandelten Precursormischung/-suspension.

Nach Abschalten und Abklemmen der externen Geräte wird der Autoklav druckfest verschlossen und unter ständigem Rühren bei 90 UPM in 1,5h auf 160°C aufgeheizt und für 10h auf dieser Temperatur gehalten. Danach wird er innerhalb von 3h auf 20°C abgekühlt und die fertige LiFePO₄-Suspension analog zu Beispiel 1 im "Seitz-Filter" filtriert. Der pH-Wert des Filtrats liegt bei 7,5. Anschließend wird mit deionisiertem Wasser gewaschen, bis das Filtrat einen Leitwert von weniger als 480µS hat. Der weißlich-graue, feste und zum Zerfließen neigende Filterkuchen wird bei 70°C über Nacht im Vakuumtrockenschrank bei < 100mbar getrocknet und in einer Labor-Rotormühle ("Fritsch Pulverisette 14") mit einem 0,08mm Sieb deagglomeriert. Die danach erhaltenen Teilchengrößenverteilungen lagen im selben Bereich wie in Beispiel 1 angegeben.

### Beispiel 5: Verkohlung eines nach dem erfindungsgemäßen Verfahren hergestellten Materials

1kg trockenes LiFePO₄ Pulver aus den Beispielen 1 bis 4 werden mit 112 g Lactose-Monohydrat und 330g deionisiertem Wasser innig vermengt und über Nacht im Vakuumtrockenschrank bei 70°C und < 100mbar auf eine Restfeuchte < 5% getrocknet. Das sprödharte Trocknungsprodukt wird von Hand gebrochen und in einer Scheibenmühle ("Fritsch Pulverisette 13") mit 1mm Scheibenabstand grob gemahlen und in Edelstahltiegeln in einen Schutzgas-Kammerofen ("Linn KS 80-S") überführt. Dieser wird bei einem Stickstoff-Strom von 200 1/h innerhalb von 3h auf 750°C aufgeheizt, für 5h auf dieser Temperatur gehalten und innerhalb ca. 36h auf Raumtemperatur abgekühlt. Das kohlehaltige Produkt wird in einer Labor-Rotormühle ("Fritsch Pulverisette 14") mit einem 0,08mm Sieb deagglomeriert.

Die REM-Analyse der Teilchengrößenverteilung wie vor den Beispielen für kohlehaltige Materialien beschrieben ergab folgende Werte: D50-Wert kleiner 0,6 µm, Differenz zwischen D90-Wert und D10-Wert kleiner 1,5 µm.

In elektrochemischen Tests an Dünnfilmelektrode, wie sie beispielsweise in Anderson et al., Electrochem. And Solid State Letters 3 (2) (2000), Seiten 66-68 offenbart sind, zeigte das kohlehaltige erfindungsgemäße Material (ausgehend von dem Produkt der Beispiele 1, 3 und 4) gegenüber dem ohne Verwendung eines Dispergators hergestellten Vergleichsmaterial sowie einem durch ein reines Sinterverfahren gemäß Stand der Technik hergestellten Material die besten Eigenschaften, insbesondere bei hohen Lade/Entladeraten.

## Patentansprüche

1. Verfahren zur Herstellung einer Verbindung der Formel LiMPO₄, worin M mindestens ein Metall der ersten Übergangsreihe darstellt und Co umfasst, umfassend die folgenden Schritte:
a. Herstellen einer Precursormischung, enthaltend mindestens eine Li⁺-Quelle, mindestens eine M²⁺-Quelle, die Co²⁺ umfasst, und mindestens eine PO₄³⁻-Quelle, um einen Niederschlag zu fällen und somit eine Precursorsuspension herzustellen;
b. Dispergier- oder Mahlbehandlung der Precursormischung und/oder der Precursorsuspension, bis der D90-Wert der Teilchen in der Precursorsuspension weniger als 50 µm beträgt;
c. Gewinnung von LiMPO₄ aus der gemäß b) erhaltenen Precursor-suspension, vorzugsweise durch Umsetzung unter hydrothermalen Bedingungen.

2. Verfahren nach Anspruch 1, **dadurch gekennzeichnet,**
**dass** der D90-Wert der Teilchen in der Suspension bei maximal 25 µm, insbesondere maximal 20 µm, besonders bevorzugt maximal 15 µm liegt; und/oder
**dass** M zumindest Fe umfasst; und/oder
**dass** M Fe, Mn, Co und/oder Ni umfasst.

3. Verfahren nach einem der vorstehenden Ansprüche, **dadurch gekennzeichnet,**
**dass** das LiMPO₄ in phasenreiner Form gewonnen wird; und/oder dass die Dispergier- oder Mahlbehandlung vor oder während der Fällung der Precursormischung einsetzt und bis zum Abschluss der Fällung fortgesetzt wird; und/oder
**dass** die Dispergierbehandlung vor der Fällung der Precursormischung einsetzt, um eine hohe Kristallkeimbildung zu gewährleisten und die Bildung großer Kristalle und Kristallagglomerate zu verhindern; und/oder
**dass** vor der Umsetzung der Precursormischung oder -suspension unter hydrothermalen Bedingungen kein Eindampfen erfolgt; und/oder dass vor der Umsetzung der Precursormischung oder -suspension unter hydrothermalen Bedingungen kein Sintern erfolgt; und/oder dass nach der Umsetzung unter hydrothermalen Bedingungen eine Trocknung des LiMPO₄ erfolgt.

4. Verfahren nach einem der vorstehenden Ansprüche,
**dadurch gekennzeichnet,**
**dass** die Herstellung der Precursormischung bzw. -suspension oder die Umsetzung unter hydrothermalen Bedingungen in Anwesenheit mindestens einer weiteren Komponente, insbesondere einer kohlenstoffhaltigen oder elektronenleitfähigen Substanz oder dem Vorläufer einer elektronenleitfähigen Substanz erfolgt; und/oder
**dass** es sich bei der elektronenleitfähigen Substanz um Kohle, insbesondere Leitkohle oder Kohlefasern handelt; und/oder dass es sich bei dem Vorläufer einer elektronenleitfähigen Substanz um eine kohlenstoffhaltige Substanz, insbesondere eine Zuckerverbindung handelt.

5. Verfahren nach einem der vorstehenden Ansprüche, **dadurch gekennzeichnet,**
**dass** als Lithiumquelle LiOH oder Li₂CO₃ verwendet wird; und/oder dass als M²⁺-Quelle ein M²⁺-Salz, insbesondere MSO₄, MC1₂, MNO₃, M₃ (PO₄) ₂ oder ein Organylsalz von M verwendet wird; und/oder dass als PO₄³⁻-Quelle Phosphorsäure, ein Metallphosphat, Hydrogenphosphat oder Dihydrogenphosphat verwendet wird; und/oder dass in der Precursor-Mischung Wasser als Lösungsmittel verwendet wird; und/oder
**dass** die Li⁺-Quelle, die M²⁺-Quelle, die Co²⁺ umfasst, in Form von wässrigen Lösungen eingesetzt werden, und die PO₄³⁻-Quelle in Form einer Flüssigkeit oder einer wässrigen Lösung eingesetzt wird.

6. Verfahren nach einem der vorstehenden Ansprüche, **dadurch gekennzeichnet,**
**dass** der in der Precursorsuspension gebildete Niederschlag mindestens einen Precursor von LiMPO₄, insbesondere Vivianit, umfasst, und vorzugsweise anschließend unter hydrothermalen Bedingungen die Umsetzung in LiMPO₄ erfolgt; und/oder dass bei den hydrothermalen Bedingungen Temperaturen zwischen 100 bis 250°C, insbesondere 100 bis 180°C sowie ein Druck von 1 bar bis 40 bar, insbesondere 1 bar bis 10 bar Dampfdruck verwendet werden; und/oder
**dass** die Komponenten der Precursormischung in folgendem stöchiometrischen Verhältnis vorliegen:
a. 1 mol M²⁺ : 1 mol PO₄³⁻ : 1 mol Li* (1 : 1 : 1)
b. 1 mol M²⁺ : 1 mol PO₄³- : 3 mol Li* (1 : 1 : 3)
c. jedes Mischungsverhältnis zwischen a und b; und/oder dass die Zusammengabe oder Umsetzung der
Precursormischung oder -suspension unter hydrothermalen Bedingungen unter Inertgasatmosphäre erfolgt, vorzugsweise in demselben Gefäß; und/oder
**dass** zunächst in wässrigem Lösungsmittel die M²⁺-Quelle, die Co²⁺ umfasst, und die PO₄³⁻-Quelle, insbesondere unter Inertgasatmosphäre, gemischt werden, anschließend, vorzugsweise wiederum unter Schutzgas- oder Inertatmosphäre, die Li⁺-Quelle zugegeben wird und dann die Umsetzung unter hydrothermalen Bedingungen erfolgt; und/oder
**dass** es sich bei der Dispergier- oder Mahlbehandlung um eine Behandlung mit Dispergatoren (mit oder ohne Pumprotor), Ultraturrax, Mühlen wie Kolloidmühlen oder Manton-Gaulin-Mühlen, Intensivmischern, Kreiselpumpen, In-Line-Mischern, Mischdüsen wie Injektordüsen oder Ultraschallgeräten handelt; und/oder dass zur hochscherenden Behandlung gemäß Anspruch 1b ein Rührwerk oder dergleichen, insbesondere ein Ultra-Turrax-Rührer verwendet wird, wobei der Leistungseintrag, berechnet nach der Formel P = 2 n n M, wobei M das Drehmoment und n die Drehzahl darstellt bei mindestens 5 kW/m³, insbesondere mindestens 7 kW/m³ liegt.

7. Verfahren nach einem der vorstehenden Ansprüche, **dadurch gekennzeichnet, dass** die zusätzliche Komponente gemäß der ersten zwei Alternativen von Anspruch 4 als Kristallisationskeim in der Fällung bzw. Umsetzung der Precursormischung verwendet wird.

8. LiMPO₄, insbesondere LiFePO₄ oder LiCoPO₄, erhältlich nach einem der vorstehenden Verfahrensansprüche.

9. LiMPO₄, insbesondere gemäß Anspruch 8, **dadurch gekennzeichnet, dass** die mittlere Teilchengröße (D50-Wert) bei weniger als 0,8 µm, vorzugsweise bei weniger als 0,7 µm, insbesondere bei weniger als 0,6 µm, besonders bevorzugt bei weniger als 0,5 µm liegt; und/oder dass der D10-Wert der Teilchen bei weniger als 0,4 µm, vorzugsweise bei weniger als 0,35 µm liegt, und weiter bevorzugt der D90-Wert bei weniger als 3,0 µm, insbesondere bei weniger als 2,5 µm, am meisten bevorzugt bei weniger als 2,0 µm liegt; und/oder
dass die Differenz zwischen dem D90-Wert und dem D10-Wert der Teilchen nicht mehr als 2 µm, vorzugsweise nicht mehr als 1,5 µm, insbesondere nicht mehr als 1 µm, besonders bevorzugt nicht mehr als 0,5 µm beträgt; und/oder
dass die BET-Oberfläche mehr als 3,5 m²/g, insbesondere mehr als 4 m²/g, besonders bevorzugt mehr als 5 m²/g, weiter bevorzugt mehr als 10 m²/g, am meisten bevorzugt mehr als 15 m²/g beträgt.

10. Zusammensetzung, insbesondere Elektrodenmaterial, enthaltend LiMPO₄ gemäß einem der Ansprüche 8 bis 9.

11. Zusammensetzung nach Anspruch 10, weiterhin enthaltend mindestens eine weitere Komponente, insbesondere eine kohlenstoffhaltige oder elektronenleitfähige Substanz oder den Vorläufer einer elektronenleitfähigen Substanz, besonders bevorzugt Kohle, Leitkohle oder Kohlefasern.

12. Sekundäre Batterie, enthaltend eine Zusammensetzung, insbesondere ein Elektrodenmaterial nach Anspruch 10 oder 11.

13. Verwendung von LiMPO₄ gemäß einem der Ansprüche 8 bis 9 als Elektrodenmaterial.

14. Verfahren nach einem der Ansprüche 1 bis 7, **dadurch gekennzeichnet,**
**dass** nach der Hydrothermalbehandlung das LiMPO₄ abgetrennt wird, insbesondere durch Filtration und/oder Zentrifugation, gegebenenfalls getrocknet und gegebenenfalls deagglomeriert wird.

15. Verfahren nach einem der Ansprüche 1 bis 7, **dadurch gekennzeichnet,**
**dass** das aus der Hydrothermalbehandlung erhaltene LiMPO₄ in einem Pyrolyse-Verfahren, bei dem mindestens ein Kohlenstoff-Vorläufermaterial, vorzugsweise ein Kohlenhydrat wie Zucker oder Cellulose und besonders bevorzugt Lactose, mit dem LiMPO₄ vermengt wird, z. B. durch Verkneten, wobei Wasser als Hilfsmittel zugegeben werden kann.

16. Verfahren nach Anspruch 15, **dadurch gekennzeichnet, dass** das Kohlenstoff-Vorläufermaterial dem nach der Hydrothermalsynthese durch Abtrennung erhaltenen feuchten LiMPO₄-Filterkuchen zugegeben wird, die Mischung aus LiMPO₄ und Kohlenstoff-Vorläufermaterial. getrocknet und auf eine Temperatur zwischen 500°C und 1000°C, bevorzugt zwischen 700°C und 800°C erhitzt wird, wobei das Kohlenstoff-Vorläufermaterial zu Kohle pyrolysiert wird.

17. Verfahren nach Anspruch 16, **dadurch gekennzeichnet,**
**dass** sich an die Pyrolyse eine Mahl- oder Deagglomerationsbehandlung anschließt; und/oder
**dass** die Trocknung vorzugsweise an Schutzgas, an Luft oder im Vakuum bei Temperaturen von vorzugsweise 50°C bis 200°C erfolgt, und die Pyrolyse unter Schutzgas durchgeführt wird.

18. Verfahren, LiMPO_{4,} Zusammensetzung, Sekundäre Batterie oder Verwendung nach einem der vorstehenden Ansprüche, **dadurch gekennzeichnet, dass** es sich bei dem LiMPO₄ um LiCoPO₄ handelt.
